# EUROPEAN PATENT SPECIFICATION

(11) **EP 2 859 209 B1**
(45) Date of publication and mention of the grant of the patent: **24.02.2021**
(21) Application number: 13727122.7
(22) Date of filing: 31.05.2013
(51) Int. Cl.: F02C 7/143, F04D 29/58, F02C 6/06, F04D 17/12

(54) **HIGH PRESSURE RATIO COMPRESSORS WITH MULTIPLE INTERCOOLING AND RELATED METHODS**
VERDICHTER MIT HOHEM DRUCKVERHÄLTNIS UND MEHRFACHER ZWISCHENKÜHLUNG SOWIE ZUGEHÖRIGE VERFAHREN
COMPRESSEURS À TAUX DE COMPRESSION ÉLEVÉ À PLUSIEURS REFROIDISSEMENTS INTERMÉDIAIRES ET PROCÉDÉS ASSOCIÉS

(30) Priority: 06.06.2012 IT CO20120030
(43) Date of publication of application: 15.04.2015
(73) Proprietor: Nuovo Pignone S.r.l., 50127 Florence (IT)
(72) Inventor: GUENARD, Denis Guillaume, I-71203 Le Creusot (IT); BANCHI, Nicola, I-50127 Firenze (IT); GABBRIELLI, Andrea, I-50127 Firenze (IT); TACCONELLI, Remo, I-50127 Firenze (IT); BOZZONE, Fabio, I-50127 Firenze (IT); GRECO, Giorgio, I-50127 Firenze (IT)
(74) Representative: BRP Renaud & Partner mbB Rechtsanwälte Patentanwälte Steuerberater
(86) International application number: PCT/EP2013/061295
(87) International publication number: WO 2013/182492

(56) References cited:
- WO-A1-2006/079438
- WO-A2-2011/023690
- DE-A1- 1 428 047
- GB-A- 1 000 134
- US-A- 3 717 418
- US-A- 4 969 803

## Description

### TECHNICAL FIELD

Embodiments of the subject matter disclosed herein generally relate to high pressure ratio compressors with multiple intercooling and related methods; more particularly, to a turbocompressor/generator train using a high pressure compressor with multiple intercooling instead of plural compressors.

US 3 717 418 A discloses a compressor barrel assembly in which inlet fluid is passed along a convoluted path between first, second and third stage impellers and intercooler chambers.

### DISCUSSION OF THE BACKGROUND

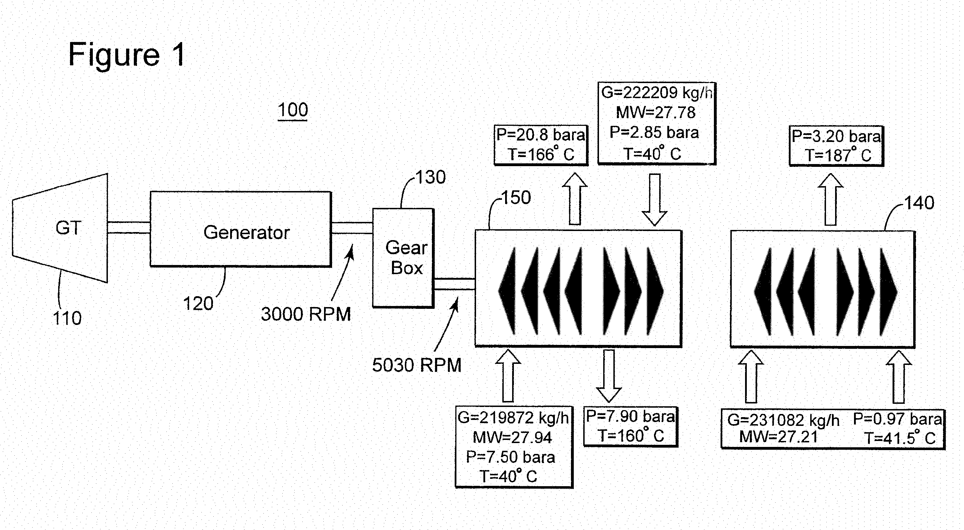

One type of turbo-machinery is a centrifugal compressor. Centrifugal compressors are usually designed in families intended to cover a specific flow range and use. In order to achieve a desired compression ratio, a centrifugal compressor may be arranged to perform compression one after another. For example, two centrifugal compressors are typically arranged in a turbo-compressor/generator train 100 as illustrated in Figure 1. Such turbocompressor/generator trains may be used for blast furnaces in the steel industry, natural gas liquefaction, gas reinjection and other oil and gas services.

Five machines are mechanically coupled in the turbo-compressor/generator train 100: a gas turbine 110, a generator 120, a gear box 130, a first low pressure compressor 140, and a second compressor 150. This type of arrangement is sometimes called a "single-shaft" configuration.

The generator 120 may have a rotation speed of 3000 rotations per minute (RPM). The gear box 130 is a step-up type of gear, for example, increasing the rotation speed to ∼5000 RPM and transmitting this rotation to the first compressor 140 and to the second compressor 150.

The first low pressure compressor 140 may be of a double flow type receiving via two inputs the gas flow at an input pressure (e.g., of about 0.97 bar) and an input temperature (e.g., of about 41.5° C), and outputting the gas flow at an output pressure (e.g., of about 3.20 bar) and an output temperature (e.g., of about 187° C). The output gas is then cooled and input to the second compressor 150.

The second compressor 150 may be a two-section type of compressor receiving first an input gas flow at a first input pressure (e.g., 2.85 bar) and a first input temperature (e.g., of about 40° C) and outputting a first output flow at a first output pressure (e.g., of about 7.90 bar) and a first output temperature (e.g., of about 160° C). This first output flow is then cooled and input to the compressor 150 as a second flow at a second input pressure (e.g., 7.50 bar) and a second input temperature (e.g., of about 40° C). The compressor 150 then outputs a second output flow at a second output pressure (e.g., of about 20.8 bar) and a second output temperature (e.g., of about 166° C).

Note that the second input pressure is slightly lower than the first output pressure, and the third input pressure is slightly lower than the second output pressure. Also, the gas flow may be about 22-230000 kg/h, but flow losses of around 10% may occur during cooling.

In the conventional turbo-compressor/generator train, the compressor has closed and shrunk fit impellers, the required compression being achieved by splitting the compression process into sub-processes performed inside the two different compressors. Reliability is sub-optimal due to the use of the two different compressors and the transition there-between. Additionally, the cost of the two compressors and the operating costs (footprint) thereof make it attractive to seek using more efficient, cheaper and reliable equipment for the compression. Accordingly, it would be desirable to provide a high pressure compressor with multiple intercooling and related methods that avoid the afore-described problems and drawbacks. The present invention is defined in the accompanying claims.

The use of a high pressure air compressor with two levels of intercooling instead of two compressors in a turbo-compressor/generator train allows removal of one large casing, leading to a benefit in size, cost, overall reliability and footprint.

According to the invention, a high pressure ratio compressor with multiple intercooling used in a turbo-compressor/generator train includes a casing with plural chambers, one or more shafts penetrating inside the chambers, and impellers mounted on the one or more shafts, inside the chambers, respectively. Each chamber has a gas inlet and a gas outlet to allow gas flow to be input into and to be output from the respective chambers. A gas flow is successively compressed in each of the chambers, and is cooled outside the compressor when transferring from one chamber to the next chamber among the plural chambers.

According to the invention, a method of retrofitting a conventional turbo-compressor/generator train includes (A) removing at least two compressors from the conventional turbo-compressor/generator train, and (B) adding a single high pressure ratio compressor with multiple intercooling. The single compressor is configured to achieve the same compression as the removed compressors.

The accompanying drawings, which are incorporated in and constitute a part of the specification, illustrate one or more embodiments and, together with the description, explain these embodiments. In the drawings:
Figure 1 is a schematic diagram of a conventional turbo-compressor/generator train;
Figure 2 is a schematic diagram of a turbo-compressor/generator train, according to an embodiment of the invention;
Figure 3 is a schematic diagram of a turbo-compressor/generator train, according to a non-claimed embodiment; and
Figure 4 is a flowchart illustrating a method for retrofitting a conventional turbocompressor/generator train, according to another embodiment of the invention.

The following description of the exemplary embodiments refers to the accompanying drawings. The same reference numbers in different drawings identify the same or similar elements. The following detailed description does not limit the invention. Instead, the scope of the invention is defined by the appended claims.

According to the invention, plural impellers are mounted in the same one casing to achieve a more efficient, cheaper and reliable compressor capable of performing the duty of the two compressors in a conventional turbo-compressor/generator train.

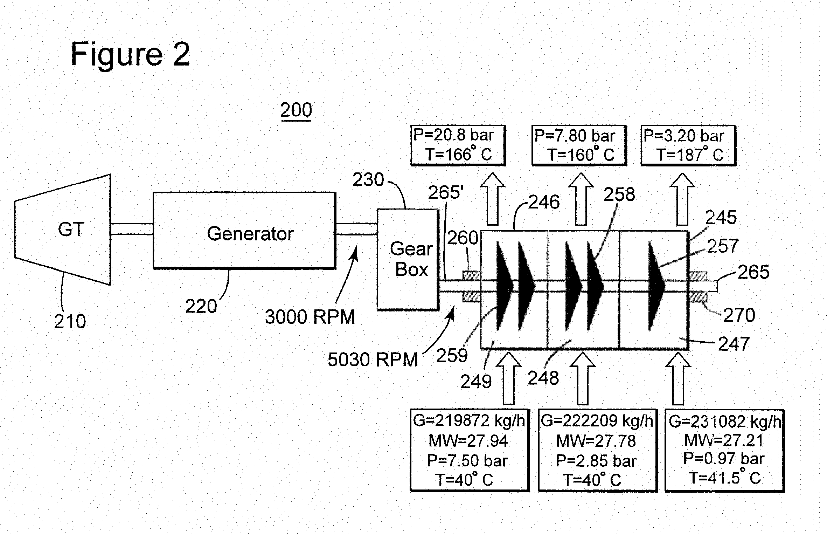

A schematic diagram of a turbo-compressor/generator train 200, according to an inventive embodiment, is illustrated in Figure 2. The turbo-compressor/generator train 200 includes a gas turbine 210, a generator 220, a gear box 230, and a single compressor 245 with multiple cooling. The gas turbine 210, the generator 220, and the gear box 230 may be similar to the gas turbine 110, the generator 120, and the gear box 130 in the conventional turbo-compressor/generator train 100.

The compressor 245 is a high pressure ratio compressor with multiple intercooling. The ratio of the output pressure (of the gas flow output from the compressor 245 after being compressed) to the input pressure (of the gas flow input to the compressor 245 for being compressed) may be over 20. Shafts 265 and 265' of the compressor 245 are axially connected and may be supported by plural bearings. In Figure 2, a first bearing 260 is located outside the casing 246 of the compressor 245, on the shaft 265' at a side of the casing 245 toward the gear box 230. A second bearing 270 is also located outside the casing 246, on the shaft 265 at the opposite side of the casing 246 relative to the side where the first bearing 260 is located.

The compressor 245 has three chambers 247, 248 and 249, each chamber having a gas inlet and a gas outlet to allow gas flow to enter and to exit the respective chamber. The gas may be air. The shafts 265 and 265' penetrate through the chambers. Impellers 257, 258 and 259 are mounted on the shafts in chambers 247, 248 and 249, respectively. The impellers 257 and 258 are low pressure components and may be open impeller type. The impeller 259 is a high pressure component and may be of closed impeller type. The low pressure components 257 and 258 may be axially stacked, while the high pressure component 259 may be either stacked type or shrunk fit onto shaft 265'. The shafts 265 and 265' and the impellers 257, 258 and 259 are axially connected to constitute the rotor of compressor 245.

The gas flow enters the first chamber 247 of the compressor 245 having a first input pressure (e.g., of about 0.97 bar) and a first input temperature (e.g., of about 41.5° C), and is output having a first output pressure (e.g., of about 3.20 bar) higher than the first input pressure, and a first output temperature (e.g., of about 187° C) higher than the first input temperature.

The output gas is then cooled (i.e., a first cooling outside the compressor) and input into the second chamber 248 of the compressor 245 having a second input pressure (e.g., 2.85 bar) and a second input temperature (e.g., of about 40° C). Inside the second chamber 248, the gas is compressed to be output having a second output pressure (e.g., of about 7.80 bar) higher than the second input pressure, and a second output temperature (e.g., of about 160° C) higher than the second input temperature.

The gas flow is then cooled again (i.e., a second cooling outside the compressor) and input into the third chamber 249 of the compressor 245 having a third input pressure (e.g., 7.50 bar) and a second input temperature (e.g., of about 40° C). Inside the third chamber 249, the gas is compressed to be output having a third output pressure (e.g., of about 20.8 bar) higher than the third input pressure, and a third output temperature (e.g., of about 166° C) higher than the third input temperature.

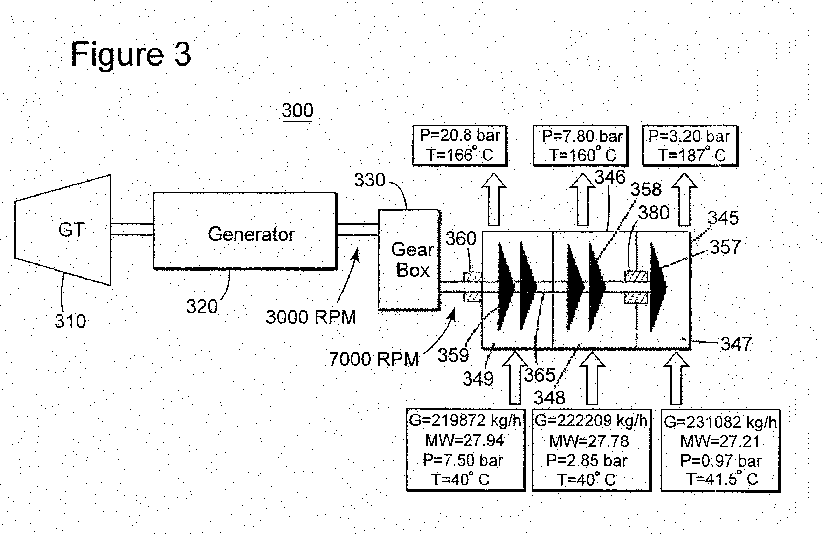

A schematic diagram of a turbo-compressor/generator train 300, according to a non-claimed embodiment, is illustrated in Figure 3. The turbo-compressor/generator train 300 includes a gas turbine 310, a generator 320, a gear box 330, and a single compressor 345 with multiple cooling. The gas turbine 310, the generator 320, and the gear box 330 may be similar to the gas turbine 110, the generator 120, and the gear box 130 in the conventional turbo-compressor/generator train 100.

Similar to compressor 245, the compressor 345 is a high pressure ratio compressor with multiple intercooling that may achieve a ratio of the output pressure to the input pressure over 20. The compressor 345 has three chambers 347, 348 and 349, with impellers 357, 358 and 359 mounted on the shaft 365 therein. The gas flow is compressed inside the chambers 347, 348 and 349 in a manner similar to the manner described relative to compressor 245.

The shaft 365 of compressor 345 may be supported by plural bearings. A first bearing 360 is located outside the compressor 345, at a side of the casing 346 of the compressor 345 toward the gear box 330. Different from compressor 245, a second bearing 380 is located inside compressor 345 between chamber 347 and chamber 348 thereof. This arrangement of the bearings allows a higher rotation of the shaft 365, than of shafts 265, 265', for example, up to 7000 RPM.

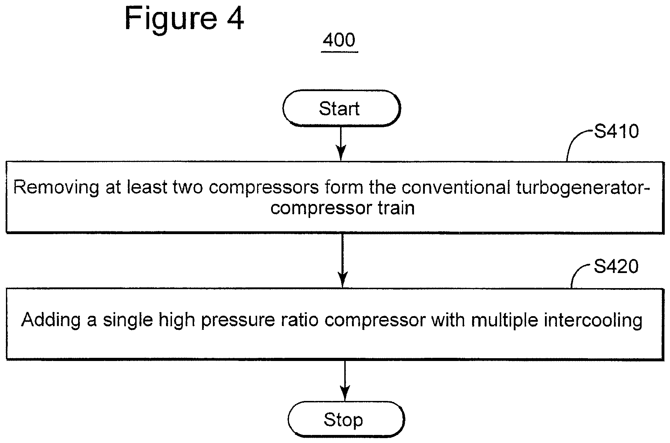

Conventional turbo-compressor/generator trains may be retrofitted by replacing the two compressors with a single high pressure ratio compressor with multiple intercooling. Figure 4 is a flowchart illustrating a method 400 for retrofitting a conventional turbo-compressor/generator train, according to an inventive embodiment. The method 400 includes removing at least two compressors from the conventional turbo-compressor/generator train, at S410, and adding a single high pressure ratio compressor with multiple intercooling, at S420. The single compressor is configured to achieve the same compression as the removed compressors.

The single compressor has multiple chambers inside which a gas flow is compressed. For example, the single compressor may have three chambers. The compressed gas flow is output from two of the chambers to be cooled outside the compressor before being directed into the next chamber.

The method includes adding at least two bearings to support a shaft of the single compressor. One of the added bearings is located outside the casing of the single compressor, at a side thereof toward the gear box of the turbo-compressor/generator train. A second bearing is also located outside the casing of the single compressor, at the opposite side of the casing relative to the side where the first bearing is located.

The disclosed exemplary embodiments provide a turbo-compressor/generator train including a single high pressure compressor with multiple cooling and related methods. It should be understood that this description is not intended to limit the invention. On the contrary, the exemplary embodiments are intended to cover alternatives, modifications and equivalents, which are included in the scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## Claims

1. A high pressure ratio compressor (245) with multiple intercooling used in a turbocompressor/generator train (200), the compressor being configured to be connected to a gear box (230) of the turbo-compressor/generator train and comprising:
a casing (246) with plural chambers (247, 248, 249), each chamber having a gas inlet and a gas outlet to allow gas flow to be input into and to be output from the respective chamber;
one or more shafts (265, 265') penetrating inside the chambers; and
impellers (257, 258, 259) mounted on the one or more shafts, inside the chambers, respectively,
wherein a gas flow is arranged to be successively compressed in each of the chambers (247, 248, 249), and to be
cooled outside the casing (246) when transferring from one chamber to a next chamber among the plural chambers; and
plural bearings (260, 270) supporting the one or more shafts, wherein one of the plural bearings (260) is located on the shaft outside the casing, at a first side of the casing towards the gear box of the turbo-compressor/generator train and another one of the plural bearings (270) is located on the shaft outside the casing, at an opposite side of the casing relative to the first side of the casing.

2. The compressor of claim 1, wherein the compressor (245) is arranged to achieve a compression ratio over 20, for a gas flow around 220000 kg/h.

3. The compressor of claim 1 or claim 2, wherein the chambers (247, 248, 249) are arranged in an order corresponding to an output pressure of the gas flow.

4. The compressor of any preceding claim, wherein the compressor includes three chambers.

5. The compressor of claim 1, wherein the compressor is arranged to meet at least one of the following conditions:
temperatures of the gas flow input in each of the chambers is around 40° C;
a ratio of pressure of the gas flow output from each chamber to pressure of the gas flow input in the respective chamber is between 2.5 and 3.5;
an input pressure of the gas flow input in a first chamber of the compressor is about 1 bar;
an output pressure of the gas flow output from the compressor is about 20.8 bar; and
a rotation speed of the one or more shafts is between 5000-7000 RPM.

6. A turbo-compressor/generator train (200) comprising a high pressure ration compressor (245) with multiple intercooling according to any preceding claim.

7. A method (400) of retrofitting a conventional turbo-compressor/generator train, the method comprising:
removing (S410) at least two compressors from the conventional turbocompressor/generator train; and
adding (S420) a single high pressure ratio compressor with multiple intercooling according to any of claims 1 to 5,
wherein the single compressor is configured to achieve the same compression as the removed compressors.

## Patentansprüche

1. Verdichter mit hohem Druckverhältnis (245) und mehrfacher Zwischenkühlung, der in einem Turboverdichter/Generatorstrang (200) verwendet wird, wobei der Verdichter konfiguriert ist, um mit einem Getriebe (230) des Turboverdichters/Generatorstrangs verbunden zu werden, umfassend:
ein Gehäuse (246) mit mehreren Kammern (247, 248, 249), wobei jede Kammer einen Gaseinlass und einen Gasauslass aufweist, um zu ermöglichen, dass ein Gasstrom in die jeweilige Kammer eingegeben und aus dieser ausgegeben wird;
eine oder mehrere Wellen (265, 265'), die in das Innere der Kammern eindringen; und
Laufräder (257, 258, 259), die jeweils auf der einen oder den mehreren Wellen innerhalb der Kammern montiert sind,
wobei ein Gasstrom so angeordnet ist, dass er nacheinander in jeder der Kammern (247, 248, 249) verdichtet wird und außerhalb des Gehäuses (246) gekühlt wird, wenn er von einer Kammer zu einer nächsten Kammer unter den mehreren Kammern überführt wird; und
mehrere Lager (260, 270), die die eine oder die mehreren Wellen tragen, wobei eines der mehreren Lager (260) auf der Welle außerhalb des Gehäuses, an einer ersten Seite des Gehäuses in Richtung des Getriebes des Turboverdichters/Generatorstrangs angeordnet ist und ein anderes der mehreren Lager (270) auf der Welle außerhalb des Gehäuses an einer gegenüberliegenden Seite des Gehäuses relativ zu der ersten Seite des Gehäuses angeordnet ist.

2. Verdichter nach Anspruch 1, wobei der Verdichter (245) angeordnet ist, um ein Verdichtungsverhältnis über 20 für einen Gasstrom um 220000 kg/h zu erreichen.

3. Verdichter nach Anspruch 1 oder Anspruch 2, wobei die Kammern (247, 248, 249) in einer Reihenfolge angeordnet sind, die einem Ausgangsdruck des Gasstroms entspricht.

4. Verdichter nach einem der vorstehenden Ansprüche, wobei der Verdichter drei Kammern einschließt.

5. Verdichter nach Anspruch 1, wobei der Verdichter angeordnet ist, um mindestens eine der folgenden Bedingungen zu erfüllen:
die Temperaturen des Gasstroms, der in jede der Kammern eingegeben wird, betragen etwa 40 °C;
ein Verhältnis des Drucks des Gasstroms, der aus jeder Kammer ausgegeben wird, zum Druck des Gasstroms, der in die jeweilige Kammer eingegeben wird, liegt zwischen 2,5 und 3,5;
ein Eingangsdruck des Gasstroms, der in eine erste Kammer des Verdichters eingegeben wird, beträgt etwa 1 bar;
ein Ausgangsdruck des Gasstroms, der aus dem Verdichter ausgegeben wird, beträgt etwa 20,8 bar; und
eine Drehzahl der einen oder mehreren Wellen liegt zwischen 5000-7000 U/min.

6. Turboverdichter/Generatorstrang (200), umfassend einen Verdichter mit hohem Druckverhältnis (245) und mehrfacher Zwischenkühlung nach einem der vorstehenden Ansprüche.

7. Verfahren (400) zum Nachrüsten eines herkömmlichen Turboverdichters/Generatorstrangs, wobei das Verfahren umfasst:
Entfernen (S410) von mindestens zwei Verdichtern aus dem herkömmlichen Turboverdichter/Generatorstrang; und
Hinzufügen (S420) eines einzelnen Verdichters mit hohem Druckverhältnis und mehrfacher Zwischenkühlung nach einem der Ansprüche 1 bis 5,
wobei der einzelne Verdichter konfiguriert ist, um die gleiche Verdichtung wie die entfernten Verdichter zu erreichen.

## Revendications

1. Compresseur à rapport de pression élevé (245) avec refroidissement intermédiaire multiple utilisé dans un train de turbocompresseur/générateur (200), le compresseur étant configuré pour être relié à un réducteur (230) du train de turbocompresseur/générateur et comprenant :
un carter (246) avec de multiples chambres (247, 248, 249), chaque chambre ayant une entrée de gaz et une sortie de gaz pour permettre à un flux de gaz d'être introduit dans et d'être délivré en sortie par la chambre respective ;
un ou plusieurs arbres (265, 265') pénétrant à l'intérieur des chambres ; et
des roues (257, 258, 259) montées sur le ou les arbres, à l'intérieur des chambres, respectivement,
dans lequel un flux de gaz est agencé pour être successivement comprimé dans chacune des chambres (247, 248, 249), et pour être refroidi à l'extérieur du carter (246) lors d'un transfert d'une chambre à une chambre suivante parmi les multiples chambres ; et
de multiples paliers (260, 270) supportant le ou les arbres, dans lequel l'un des multiples paliers (260) se situe sur l'arbre à l'extérieur du carter, au niveau d'un premier côté du carter en direction du réducteur du train de turbocompresseur/générateur et un autre parmi les multiples paliers (270) se situe sur l'arbre à l'extérieur du carter, au niveau d'un côté opposé du carter par rapport au premier côté du carter.

2. Compresseur selon la revendication 1, dans lequel le compresseur (245) est agencé pour réaliser un taux de compression supérieur à 20, pour un flux de gaz d'environ 220 000 kg/h.

3. Compresseur selon la revendication 1 ou la revendication 2, dans lequel les chambres (247, 248, 249) sont agencées dans un ordre correspondant à une pression de sortie du flux de gaz.

4. Compresseur selon une quelconque revendication précédente, dans lequel le compresseur inclut trois chambres.

5. Compresseur selon la revendication 1, dans lequel le compresseur est agencé pour répondre à au moins l'une des conditions suivantes :
la température des flux de gaz introduits dans chacune des chambres est d'environ 40 °C ;
un rapport de la pression du flux de gaz délivré en sortie par chaque chambre à la pression du flux de gaz introduit dans la chambre respective est compris entre 2,5 et 3,5 ;
une pression d'entrée du flux de gaz introduit dans une première chambre du compresseur est d'environ 1 bar ;
une pression de sortie du flux de gaz délivré en sortie par le compresseur est d'environ 20,8 bar ; et
une vitesse de rotation du ou des arbres est comprise entre 5000 et 7000 tr/min.

6. Train de turbocompresseur/générateur (200) comprenant un compresseur à rapport de pression élévé (245) avec refroidissement intermédiaire multiple selon une quelconque revendication précédente.

7. Procédé (400) de rénovation d'un train de turbocompresseur/générateur classique, le procédé comprenant :
le retrait (S410) d'au moins deux compresseurs du train de turbocompresseur/générateur classique ; et
l'ajout (S420) d'un unique compresseur à rapport de pression élevé avec refroidissement intermédiaire multiple selon l'une quelconque des revendications 1 à 5,
dans lequel l'unique compresseur est configuré pour réaliser la même compression que les compresseurs retirés.
